# EUROPÄISCHE PATENTSCHRIFT

(11) **EP 1 826 642 B1**
(45) Veröffentlichungstag und Bekanntmachung des Hinweises auf die Patenterteilung: **02.09.2009**
(21) Anmeldenummer: 07003483.0
(22) Anmeldetag: 20.02.2007
(51) Int. Cl.: G05B 19/401, G05B 23/00, B23Q 17/00

(54) **Vorrichtung zur Überprüfung der Genauigkeit einer von einer Arbeitsspindel auszuführenden Kreisbahn**
Device for checking the accuracy of a circular path of a work spindle
Dispositif destiné à la vérification de l'exactitude de la trajectoire circulaire d'une broche porte-outil

(30) Priorität: 23.02.2006 DE 102006009422
(43) Veröffentlichungstag der Anmeldung: 29.08.2007
(73) Patentinhaber: Dreier Lasermesstechnik GmbH, 72160 Horb (DE)
(72) Erfinder: Dreier, Horst, 72160 Horb am Nockar (DE)
(74) Vertreter: Steimle, Josef

(56) Entgegenhaltungen:
- EP-A1- 0 258 471
- EP-A2- 0 732 170
- DE-A1- 4 110 741
- US-A- 4 435 905

## Beschreibung

Die Erfindung betrifft eine Überprüfungsvorrichtung für die Genauigkeit der Bewegung einer Arbeitsspindel einer NC-gesteuerten Werkzeugmaschine entlang einer Kreisbahn zur Herstellung von Kreiszylinderflächen an Werkstücken, gemäß dem Oberbegriff des Anspruches 1.

Eine Vorrichtung dieser Art ist bereits bekannt und Gegenstand der DE-U-295 12 250.

Diese Konstruktion bietet den Vorteil, für die Genauigkeitsüberprüfung verschiedener Durchmesser von Kreiszylinderflächen nicht mehr entsprechend unterschiedliche Referenzzylinder einsetzen zu müssen.

Allerdings ist diese Vorrichtung aufgrund des definierten Abstandes der Anlenkpunkte des sich radial zu den Achsen von Arbeitsspindel und herzustellender Kreiszylinderfläche erstreckenden Messaufnehmers lediglich zur Überprüfung nur eines einzigen Kreisbahndurchmessers geeignet.

Aus der DE-A-41 10 741 ist eine Messvorrichtung bekannt, bei der der Messarm verschieblich in einem Träger gelagert ist. Bei einer linearen Verstellung des Messarms gegenüber dem Träger wird auch die Skala mit verschoben, was eventuell zu Messungenauigkeiten führen kann.

Es ist deshalb Aufgabe der Erfindung, eine Vorrichtung der eingangs erläuterten Art so weiterzubilden, dass sich mit ihrer Hilfe die Genauigkeit unterschiedlich großer Kreisbahndurchmesser noch exakter überprüfen lässt.

Diese Aufgabe wird erfindungsgemäß durch die kennzeichnenden Merkmale des Anspruches 1 gelöst.

Die verstellbare und feststellbare Halterung eines der beiden Teilstücke des Messwertaufnehmers an einem der beiden Vorrichtungsteile quer zu den Achsen von Arbeitsspindel und Kreiszylinderfläche bietet die Möglichkeit, innerhalb einer vorgegebenen Maximaldistanz beider Achsen die Genauigkeit entsprechend unterschiedlicher Durchmesser von herzustellenden Kreiszylinderflächen bzw. die Genauigkeit des Verlaufes der Kreisbahn, entlang der hierfür die Arbeitsspindel um das Zentrum einer Kreiszylinderfläche zu führen ist, testen zu können, ohne dass hierfür zusätzliche Verlängerungen angebracht werden müssen. Verlängerungen hätten den Nachteil, dass mit diesen nur fest definierte Durchmesser von Kreiszylinderflächen überprüft werden können. D.h. die Halterung ist nicht in Stufen sondern erfindungsgemäß stufenlos bis zu einem Durchmesser von 1200 mm und insbesondere im Abstand von 1/100 mm verstellbar. So gesehen ist es mit Hilfe der Erfindung möglich, Kreiszylinderflächen zu vermessen, deren Durchmesser im Bereich bis zu 1/100 mm differieren. Hierzu ist der, insbesondere durch Magnetkraft am Maschinentisch festlegbare, und damit eine Aufstelleinheit bildende Vorrichtungsteil in radialer Richtung zur Arbeitsspindel relativ zum anderen, spindelseitig festgelegten Vorrichtungsteil entsprechend zu positionieren. Der Vorrichtungsteil kann aber auch mittels Spannpratzen, Schrauben oder eine Klemmvorrichtung befestigt werden.

Die spezielle Ausbildung des Messwertaufnehmers zum variablen Einrichten der Vorrichtung für Kreisbahnüberprüfungen der Arbeitsspindel kann vielgestaltig sein.

Erfindungsgemäß bildet das eine Teilstück des Messwertaufnehmers einen stabilen, einstellbaren Messarm, der zweckmäßig im Querschnitt kreiszylindrisch und zumindest auf einem Teil seiner Länge hohlzylindrisch ausgebildet ist, um in diesem Komponenten des Messwertaufnehmers installieren zu können.

Eine exakte Durchmessereinstellung von Kreiszylinderflächen ist dabei durch auf dem Außengewinde des Messarmes geführte Gewindestellmuttern möglich.

Erfindungsgemäß ist über die Indexierungen die zur Durchmesserüberprüfung wirksame Messarmlänge leicht bestimmbar.

Eine weitere, zu bevorzugende Ausgestaltung der Erfindung sieht gemäß Anspruch 2 vor, die Vorrichtung schnell und problemlos unterschiedlichen Messaufgaben bzw. Messdistanzen anpassen zu können.

Dabei kann eine Konstruktionsvariante auch darin bestehen, den Messarm gemäß Anspruch 3 auszubilden, was den Vorteil bietet, einerseits auf die Bereitstellung verschieden langer Messarme verzichten zu können und andererseits bei einer Beschädigung den Messarm leicht auswechseln sowie gegen solche mit anderen Messwegen, z.B. + 1, + 2, + 5, + 10 mm, austauschen zu können.

Schließlich ist es auch denkbar, den Messwertaufnehmer mit einem Messarm zu kombinieren und zwar derart, dass lediglich dieser an einem Vorrichtungsteil verstellbar gehalten ist.

Weitere Vorteile, Merkmale und Einzelheiten der Erfindung ergeben sich aus der nachfolgenden Beschreibung, in der unter Bezugnahme auf die Zeichnung ein besonders bevorzugtes Ausführungsbeispiel im Einzelnen beschrieben ist. Dabei können die in der Zeichnung dargestellten sowie in der Beschreibung und in den Ansprüchen erwähnten Merkmale jeweils einzeln für sich oder in beliebiger Kombination erfindungswesentlich sein.

In der Zeichnung zeigen:
- Figur 1: eine perspektivische Ansicht der erfindungsgemäßen Vorrichtung;
- Figur 2: eine Seitenansicht der Vorrichtung;
- Figur 3: eine Ansicht gemäß Figur 2 mit geöffnetem Mantelrohr;
- Figur 4: eine Explosionsdarstellung der Glocke;
- Figur 5: eine Explosionsdarstellung des Hauptgelenks;
- Figur 6: eine Explosionsdarstellung des Messarms; und
- Figur 7: eine Explosionsdarstellung des Trägers für das Einspannglied.

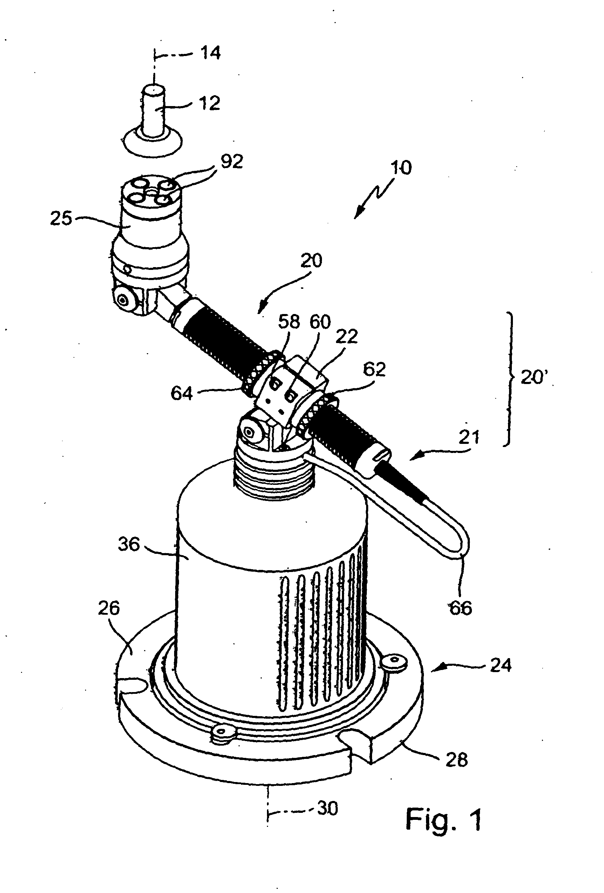

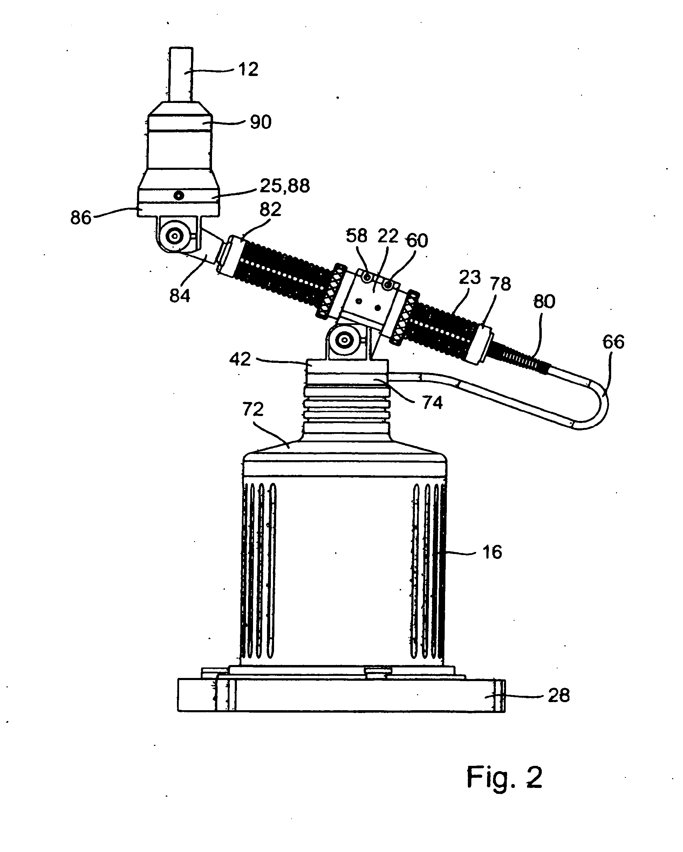

In den Figuren 1 und 2 ist ein Ausführungsbeispiel eines insgesamt mit 21 bezeichneten Messwertaufnehmers einer Überprüfungsvorrichtung 10 in Verbindung mit dem einen, am Maschinentisch einer Werkzeugmaschine festzulegenden Vorrichtungsteil der Überprüfungsvorrichtung 10 gezeigt.

Im Hinblick darauf, dass lediglich das eine, einen Messarm 20 bildende Teilstück 20' des Messwertaufnehmers 21 tragende Vorrichtungsteil dargestellt ist, sei erwähnt, dass die konstruktiven Einzelheiten der Überprüfungsvorrichtung 10 mit Ausnahme des Messarmes 20 und dessen Klemmvorrichtung 22 am gezeigten, tischseitig vorzusehenden, als Ganzes mit 24 bezeichneten Vorrichtungsteil in der DE 295 12 250 U1 in allen Details offenbart sind.

Analog zu dieser bekannten Überprüfungsvorrichtung ist, wie aus der DE 295 12 250 U1 ersichtlich, dem tischseitig vorzusehenden, im Folgenden als Aufstelleinheit bezeichneten Vorrichtungsteil 24 ein den weiteren Vorrichtungsteil bildendes Einspannglied 12 zugeordnet, das beispielsweise in einer Spannzange einer Arbeitsspindel einer NC-gesteuerten Werkzeugmaschine zu befestigen ist.

Am Einspannglied 12 ist der sich radial zur Spindelachse 14 erstreckende und mittels der Klemmvorrichtung 22 an der Aufstelleinheit 24 längsverstellbar gehaltene Messarm 20 angelenkt.

Die Aufstelleinheit 24 ist auf der sie aufnehmenden Spannfläche 26 eines Maschinentisches 28 oder gegebenenfalls eines auf diesem vorzusehenden Spannwinkels so zu orientieren, dass die geometrische Längsachse 30 der Aufstelleinheit 24 sich exakt an der Stelle befindet, an der sich bei der Bearbeitung des Werkstückes die geometrische Achse einer beispielsweise durch spangebende Bearbeitung, wie Fräsen, zu fertigenden oder gegebenenfalls nachzuarbeitenden, kreiszylindrischen Werkstückfläche befindet.

Für deren Bearbeitung ist dann an der Spannzange der Arbeitsspindel das Einspannglied der überprüfungsvorrichtung gegen ein entsprechendes Bearbeitungswerkzeug auszutauschen.

Bezüglich der Erfordernisse zur Positionierung der beiden Vorrichtungsteile für die zu überprüfende Kreisbahn der Werkzeugvorschubbewegung wird auf die diesbezüglichen, sehr ausführlichen Ausführungen im vorgenannten Gebrauchsmuster verwiesen.

In die Aufstelleinheit 24 ist ein vorzugsweise als Winkelschrittgeber ausgebildeter Drehgeber 32 koaxial zur Längsachse 30 integriert, der insbesondere mit einer Referenzmarke und/oder Richtungskennung ausgestattet ist. Dadurch lässt sich nicht nur der Nullpunkt der Drehbewegung des Messwertaufnehmers 21 exakt festlegen sondern auch die Drehrichtung und die Drehgeschwindigkeit. Auf diese Weise lässt sich seine genaue Winkelposition ermitteln.

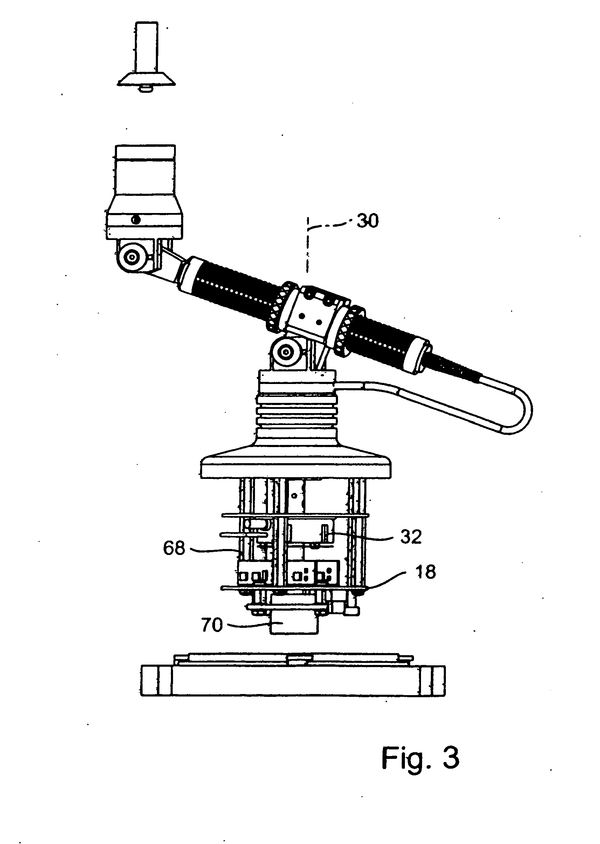

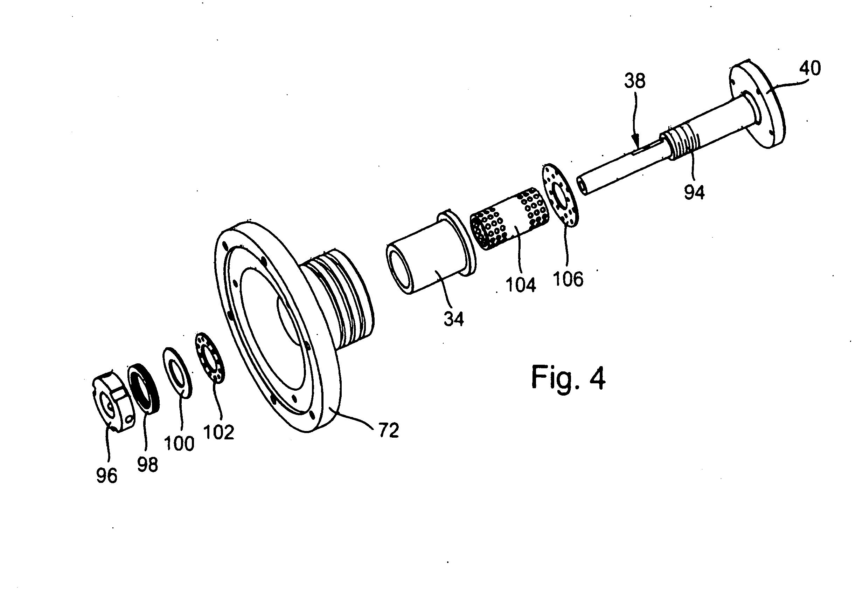

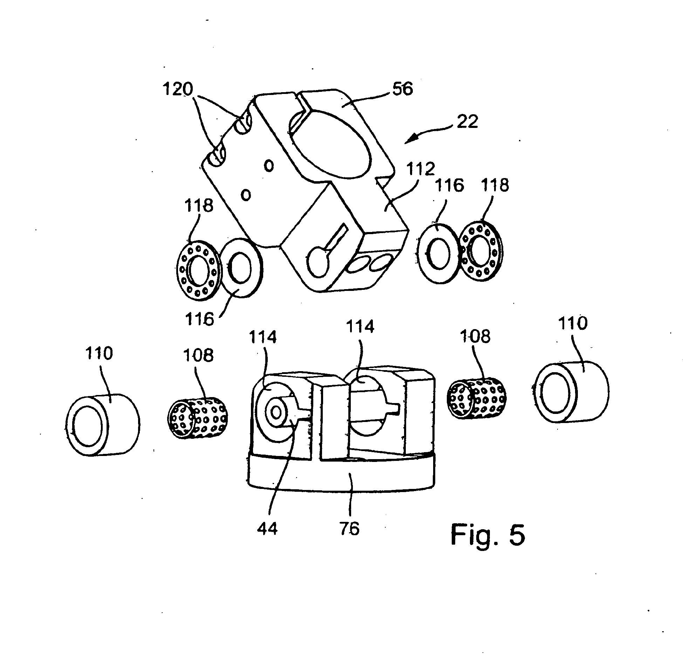

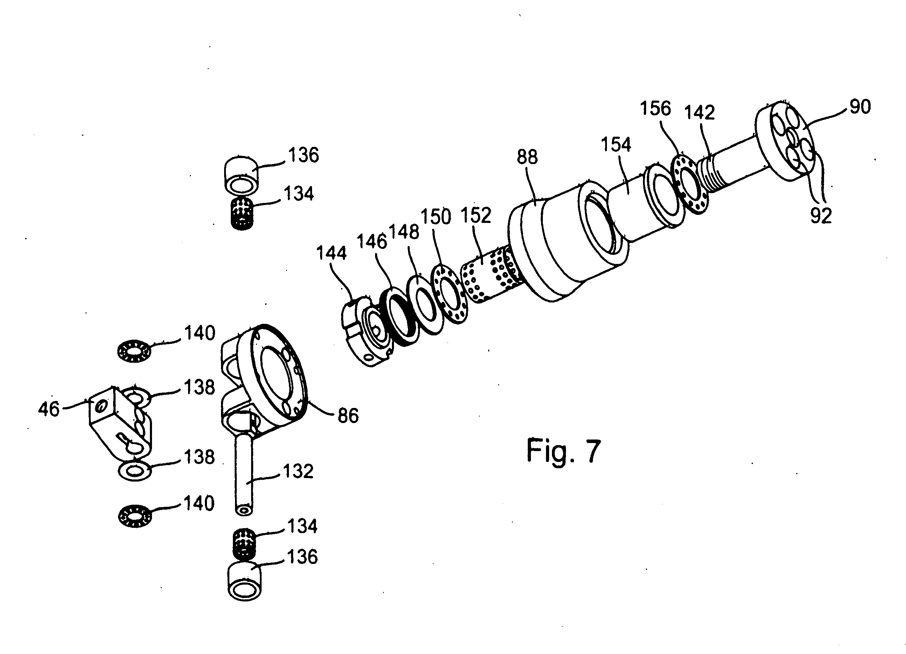

Die Figur 3 zeigt den Vorrichtungsteil 24 ohne Mantelrohr 16, so dass der Drehgeber 32, eine Platine 18 mit Elektronik, eine Platinenbefestigung 68 sowie ein gekapselter Schleifring 70 zur Signalübertragung erkennbar sind. Die Figur 2 zeigt eine auf dem Mantelrohr 16 aufsitzende und dieses nach oben abschließende Glocke 72, die von einer Hauptwelle 74 durchdrungen wird. Im Detail ist dies in Figur 4 dargestellt. Auf der Hauptwelle 74 sitzt ein Hauptgelenk 76 auf, welches seinerseits in Figur 5 näher dargestellt ist. Der Messwertaufnehmer 21 besitzt ein Systemrohr 23, das am unteren Ende mit einer Rohrkappe 78 verschlossen ist, durch welches über einen Knickschutz 80 ein Messsystemkabel 66 geführt ist, das durch die Hauptwelle 74 zum Schleifring 70 geführt wird. Das andere Ende des Systemrohrs 23 ist von einer weiteren Rohrkappe 82 verschlossen. An dieses setzt sich ein Gelenkstück 46 an, welches, wie aus Figur 7 ersichtlich ein weiteres Hauptgelenk 86 trägt. Auf diesem sitzt das Vorrichtungsteil 25 mit Gehäusekopf 88, Kopfwelle 90 und Einspannglied 12. Die Kopfwelle 90 besitzt, wie aus Figur 1 ersichtlich Magnete 92 als Bruchsicherung.

Zur rotativen Verstellung des Drehgebers 32 dient, wie aus Figur 4 ersichtlich, eine in einer Kugelbüchse 34 gelagerte, aus dem Gehäuse 36 der Aufstelleinheit 24 herausgeführte Stellwelle 38, die gehäuseaußenseitig einen Aufnahmeflansch 40 trägt, auf dem eine Lagervorrichtung 42 für den Messwertaufnehmer 21 befestigt ist. Letztere ist mit einer eine Schwenkachse definierenden Gelenkwelle 44 ausgestattet, um welche die Klemmvorrichtung 22 frei schwenkbar gelagert ist. Der Drehgeber 32 ist mit Referenzpunkten versehen und dient als Impulsgeber mit einer Auflösung von 6000 Impulsen pro Umdrehung. Zur Fixierung der Stahlwelle 38 weist diese ein Außengewinde 94 auf, auf welche ein Stellmutter 96 ,welche radial eindrehbare Sicherungsschrauben besitzt, aufgeschraubt wird. Ein Axialspiel wird über eine Axialfeder 98 ausgeglichen, an welche eine Planscheibe 100 und eine Kugelscheibe 102 anliegen. Die Stahlwelle 38 wird drehbar in einem Radialkugelkäfig 104 gelagert. Auf der Stirnseite der Kugelbüchse 34 sitzt ebenfalls eine Kugelscheibe 106 auf.

Die Figur 5 zeigt die Schwenklagerung des Messarms 20 mit Hauptgelenk 76 und Spannblock 56, der mittels der Gelenkwelle 44 im Hauptgelenk 76 schwenkbar gelagert ist. Die Lagerung selbst erfolgt in jedem Auge 114 über einen Radialkugelkäfig 108 und eine Kugelbuchse 110. Der Spannblock 56 sitzt mit einem Spannabschnitt 112 zwischen den Augen 114 und wird von der Gelenkwelle 44 durchgriffen. In axialer Richtung wird er mittels Planscheiben 116 und Kugelscheiben 118 gelagert. Der Klemmblock 56 weist noch Klemmbohrungen 120 auf, welche Spannschrauben 58 und 60 aufnehmen.

In den beim vorliegenden Ausführungsbeispiel das eine Teilstück des Messwertaufnehmers 21 bildenden Messarm 20 sind eine in diesen koaxial eingesetzte Spule 48 sowie ein in der Spule 48 axial verstellbar geführter, ferromagnetischer Kern 50 integriert. Dieser ragt mit einem Gewindezapfen 52 aus dem einen Messarmstirnende heraus. Der Gewindezapfen 52 dient zur Aufnahme des Gelenkstücks 46 zur gelenkigen Verbindung des Messarmes 20 bzw. des Kernes 50 mit dem in der Arbeitsspindel zu befestigenden, das Einspannglied bildenden, weiteren Vorrichtungssteil.

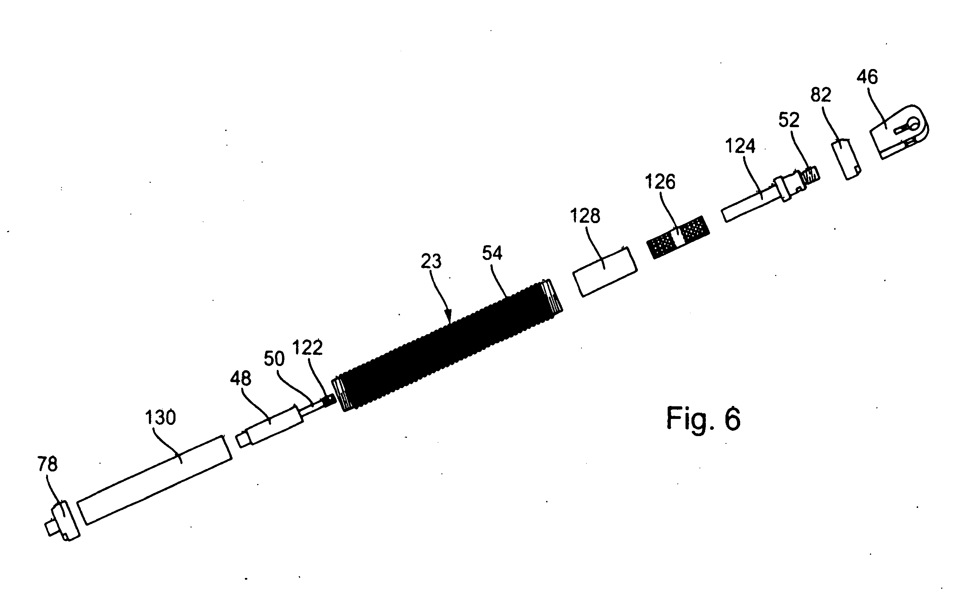

Der Messarm 20 weist, wie aus Figur 6 erkennbar, das vorzugsweise durch ein im Querschnitt kreiszylindrische, als Hohlprofil ausgebildete Systemrohr 23 auf, das ein Außengewinde 54 trägt und in der Klemmvorrichtung 22 axial verschiebbar und feststellbar geführt ist. Hierzu weist letztere einen geschlitzten, den Messarm 20 haltenden Spannblock 56 auf, bei dem mittels der Spannschrauben 58, 60 ein Klemmsitz zur Messarmfestlegung zu bewerkstelligen ist. Die Lagerung des Messsystems, insbesondere des Kerns 50, erfolgt dadurch, dass der Kern 50 ein Gewinde 122 trägt und in einen Aufnahmedorn 124 eingeschraubt ist. Der Aufnahmedorn 124 sitzt in einem Kugelkäfig 126, der von einer Kugelbüchse 128 gehalten wird. Die Kugelbüchse 128 wird in axialer Richtung von einem Distanzrohr 130 fixiert.

Zur axialen Feineinstellung des Messarmes 20 dienen zwei auf dessen Außengewinde 54 aufgeschraubte Gewindestellmuttern 62, 64, die hierzu an einander gegenüberliegenden Stirnflächen des Spannblockes 56 anlegbar sind.

An dem dem Gewindezapfen 52 gegenüberliegenden Messarmstirnende ist für den Messwertaufnehmer 21 eine elektrische Anschlussvorrichtung in Form des Messsystemkabels 66 vorgesehen.

Das Vorrichtungsteil 25 ist im Detail in Figur 7 wiedergegeben. Am Gelenkstück 46 ist über eine Gelenkwelle 132, zwei Kugelkäfige 134 und zwei Kugelbuchsen 136 sowie zwei Planscheiben 138 und zwei Kugelscheiben 140 das zweite Hauptgelenk 86 schwenkbar befestigt. Zur Fixierung der Kopfwelle 90 weist diese ein Außengewinde 142 auf, auf welche eine Stellmutter 144, welche radial eindrehbare Sicherungsschrauben besitzt, aufgeschraubt wird. Ein Axialspiel wird über eine Axialfeder 146 ausgeglichen, an welche eine Planscheibe 148 und eine Kugelscheibe 150 anliegen. Die Kopfwelle 90 wird drehbar in einem Radialkugelkäfig 152 gelagert, die ihrerseits in einer Kugelbüchse 154 drehbar gelagert ist. Auf der Stirnseite der Kugelbüchse 154 sitzt ebenfalls eine Kugelscheibe 156 auf.

Zur Verlängerung des Messarmes 20 kann auf den Gewindezapfen 52 ein entsprechendes Armverlängerungsteil aufgeschraubt werden, das seinerseits aus einer Vielzahl von miteinander kombinierbaren Verlängerungsteilstücken gleicher oder unterschiedlicher Länge gebildet sein kann.

Die axiale Verstellbarkeit des Messarmes 20 ermöglicht es, die überprüfungsvorrichtung entsprechend der gegebenen Distanz der geometrischen Achsen von Arbeitsspindel und herzustellender Kreiszylinderfläche an einem Werkstück einrichten und somit die Genauigkeit unterschiedlich großer Kreisbahndurchmesser überprüfen zu können, entlang derer die Arbeitsspindel während der Bearbeitung eines Werkstückes entlang bewegt wird.

## Patentansprüche

1. Überprüfungsvorrichtung für die Genauigkeit der Bewegung einer Arbeitsspindel einer NC-gesteuerten Werkzeugmaschine entlang einer Kreisbahn zur Herstellung von Kreiszylinderflächen an Werkstücken, mit einem an der Arbeitsspindel koaxial anbringbaren, ersten Vorrichtungsteil (25), einem zweiten Vorrichtungsteil (24), der auf einem ein zu bearbeitendes Werkstück aufnehmenden Maschinentisch (28) koaxial zur Achse (30) einer am Werkstück herzustellenden Kreiszylinderfläche positionierbar ist, einem sich radial zu den Achsen (14, 30) von Arbeitsspindel und Kreiszylinderfläche erstreckenden, elektronischen Messwertaufnehmer (21), der mit einem ersten Teilstück am ersten Vorrichtungsteil (25) und mit einem zweiten Teilstück am zweiten Vorrichtungsteil (24) angelenkt ist, und mit einem im zweiten Vorrichtungsteil (24) zur Achse (30) der herzustellenden Kreiszylinderfläche koaxial und verdrehbar gelagerten Drehgeber (32) zur Bestimmung der Winkelposition des Messwertaufnehmers (21), wobei der Messwertaufnehmer (21) mit einem seiner Teilstücke an einem der beiden Vorrichtungsteile (24, 25) quer zu den Achsen (14, 30) von Arbeitsspindel und Kreiszylinderfläche verstellbar und feststellbar gehalten ist und an dem mit dem einen Teilstück des Messwertaufnehmers (21) verstellbar verbundenen Vorrichtungsteil (24) eine dieses Teilstück aufnehmende Klemmvorrichtung (22) vorgesehen ist, die um eine zur Arbeitsspindelachse (14) und zur Längsachse des Messwertaufnehmers (21) jeweils senkrecht liegende Achse verschwenkbar ist, so dass eines der beiden, einen Messarm (20) bildenden Teilstücke des Messwertaufnehmers (21) am tischseitigen Vorrichtungsteil (24) längsverstellbar und entsprechend verschwenkbar gehalten ist, und als Einstellmittel des Messwertaufnehmers (21) an gegenüberliegenden Seiten der Klemmvorrichtung (22) anlegbare, auf einem Außengewinde (54) seines Messarmes (20) geführte Gewindestellmuttern (62, 64) vorgesehen sind, **dadurch gekennzeichnet, dass** der Messarm (20) und die Klemmvorrichtung (22) Indexierungen zur radialen Abstandsbestimmung der geometrischen Achsen von Arbeitsspindel und Kreiszylinderfläche aufweisen.

2. Vorrichtung nach Anspruch 1, **dadurch gekennzeichnet, dass** der Messarm (20) des Messwertaufnehmers (21) gegen solche anderer Länge austauschbar ist.

3. Vorrichtung nach Anspruch 1 oder 2, **dadurch gekennzeichnet, dass** der Messarm (20) durch axial ansetzbare Armteilstücke verlängerbar ist.

## Claims

1. Device for examining a precision of motion of a working spindle of an NC-controlled machine tool along a circular path for producing circular cylindrical surfaces on workpieces, having a first device part (25) for coaxial mounting to the working spindle, a second device part (24), for positioning on a machine table (28) receiving the workpiece being processed coaxially with respect to the axis (30) of a circular cylindrical surface being produced thereon, an electronic measuring value sensor (21) which extends radially with respect to the axis (14, 30) of the working spindle and the circular cylindrical surface, said sensor being hinged to said first device part (25) via a first part and to said second device part (24) via a second part, and with a rotary encoder (32) rotatably disposed in said second device part (24) and coaxial to the axis (30) of the circular cylindrical surface for determining an angular position of said measuring value sensor (21), wherein said measuring value sensor (21) with one of its parts is held on one of said device parts (24, 25) to adjust and fix said sensor transversely to the axis (14, 30) of the working spindle and the circular cylindrical surface, and a clamping device (22) is provided on said device part (24), wherein said device part (24) being adjustably connected with said one part of said measuring value sensor (21) and said clamping device (22) receiving said part and is pivotable about an axis which is perpendicular to the working spindle axis (14) and to the longitudinal axis of said measuring value sensor (21), such that one of said two parts defining a measuring arm (20) of said measuring value sensor (21) is held on said second device part (24) such that it can be adjusted in length and pivoted, and comprising threaded nuts (62, 64) as adjusting means of the measuring value sensor (21), said nuts being urgable against opposite sides of said clamping device (22) and guided on an outer thread of said measuring arm (20), **characterized in that** said measuring arm (20) and said clamping device (22) have indices for determining a radial separation between the geometric axis of the working spindle and the circular cylindrical surface.

2. The device of claim 1, **characterized in that** said measuring arm (20) of said measuring value sensor (21) is structured for replacement by others having differing lengths.

3. The device of claim 1 or 2, **characterized in that** said measuring arm (20) is structured for extension using partial arm pieces that are axially joinable.

## Revendications

1. Dispositif destiné à contrôler la précision de mouvement d'une broche porte-outil d'une machine-outil à commande CN, le long d'une trajectoire circulaire pour la réalisation de surfaces cylindriques circulaires sur des pièces, comportant une première partie de dispositif (25) à monter coaxialement sur la broche porte-outil, une deuxième partie de dispositif (24), qui peut être positionnée sur un plateau (28) de la machine recevant la pièce à traiter, coaxialement à l'axe (30) d'une surface cylindrique circulaire à réaliser sur la pièce, un capteur de valeur de mesure (21) électronique, qui est orienté radialement par rapport aux axes (14, 30) de la broche porte-outil et de la surface cylindrique circulaire et qui est articulé avec un premier tronçon sur la première partie de dispositif (25) et avec un deuxième tronçon sur la deuxième partie de dispositif (24), et comportant un capteur de rotation (32), qui est monté dans la deuxième partie de dispositif (24) de manière à pouvoir tourner et coaxialement à l'axe (30) de la surface cylindrique circulaire à réaliser et qui est destiné à déterminer la position angulaire du capteur de valeur de mesure (21), ledit capteur de valeur de mesure (21) pouvant être maintenu mobile et immobile avec un de ses tronçons sur l'une des deux parties de dispositif (24, 25) transversalement aux axes (14, 30) de la broche porte-outil et de la surface cylindrique circulaire, et, sur la partie de dispositif (24), reliée de manière réglable avec l'un des tronçons du capteur de valeur de mesure (21), est prévu un dispositif de serrage (22), qui reçoit ledit tronçon et qui est apte à pivoter autour d'un axe situé perpendiculairement à l'axe (14) de la broche porte-outil et à l'axe longitudinal du capteur de valeur de mesure (21), de telle sorte que l'un des deux tronçons, formant un bras de mesure (20), du capteur de valeur de mesure (21) est maintenu de manière réglable en longueur et, par conséquent, de manière pivotante sur la partie de dispositif (24) du côté plateau, et il est prévu des écrous filetés (62, 64) en tant que moyens de réglage du capteur de valeur de mesure (21), pouvant être appliqués contre des côtés opposés du dispositif de serrage (22) et guidés sur un filetage extérieur (54) de son bras de mesure (20), **caractérisé en ce que** le bras de mesure (20) et le dispositif de serrage (22) comportent des indexations pour déterminer la distance radiale des axes géométriques de la broche porte-outil et de la surface cylindrique circulaire.

2. Dispositif selon la revendication 1, **caractérisé en ce que** le bras de mesure (20) du capteur de valeur de mesure (21) peut être remplacé par des bras de mesure de longueur différente.

3. Dispositif selon la revendication 1 ou 2, **caractérisé en ce que** le bras de mesure (20) peut être rallongé par des parties de bras à attacher dans la direction axiale.
